# EUROPEAN PATENT SPECIFICATION

(11) **EP 1 809 065 B1**
(45) Date of publication and mention of the grant of the patent: **25.05.2011**
(21) Application number: 07100414.7
(22) Date of filing: 11.01.2007
(51) Int. Cl.: H04W 12/10

(54) **Method and system for adjusting the traffic category for a real time stream transmission**
Methode und System zum Anpassen der Verkehrsklasse für die Übertragung eines Echtzeit-Datenstroms
Méthode et système pour ajuster la catégorie de traffic à la transmission d'un flux de données en temps réel

(30) Priority: 13.01.2006 CN 200610001153
(43) Date of publication of application: 18.07.2007
(73) Proprietor: Huawei Technologies Co., Ltd., Longgang District, Shenzhen Guangdong 518129 (CN)
(72) Inventor: Zhang, Yanqiang c/o Huawei Technologies Co., Ltd., 518129, Guangdong (CN); Qiu, Weigang c/o Huawei Technologies Co., Ltd., 518129, Guangdong (CN)
(74) Representative: Thun, Clemens

(56) References cited:
- EP-A1- 1 437 901
- WO-A-2006/004467
- WO-A-2006/004472

## Description

### Field of the Invention

The present invention relates to mobile communication technologies, and more particularly, to a method and a system for switching traffic when transmitting a real time stream, and a content server for real time stream transmission, a Gateway General Packet Radio Service Supporting Node (GGSN) for real time stream transmission and a Serving General Packet Radio Service (GPRS) Support Node (SGSN) for real time stream transmission.

### Background of the Invention

The most notable feature of the third generation (3G) mobile communication system is that a higher data transmission rate can be supported, and a reasonable type of data transmission bearer traffic can be allocated according to a specific Quality of Service (QoS) requirement of application traffic, to meet the QoS requirement or the application traffic. The data transmission traffic of the 3G system can be divided into four categories according to different QoS requirements: conversational traffic, streaming traffic, interactive traffic and background traffic. The interactive traffic and the background traffic can be jointly called Best Effort (BE) traffic. The conversation traffic requires certain transmission bandwidth to be allocated, and has a strict requirement on the delay of data transmission. The conversational traffic is mainly used as the bearer of application traffic such as voice and video phone communications. The streaming traffic requires less data transmission delay and higher transmission bandwidth, and is mainly used as the bearer of the application traffic of playing multimedia. The BE traffic is mainly used as the bearer of the application traffic, such as webpage browsing, Email and background downloading, with low requirement on the time delay and the transmission bandwidth. The stream is called the real time stream as well, and the 3rd Generation Partnership Project (3GPP) defines the stream as the data which can be continuously played in the application layer while being transferred from the network to the client, such as video, audio and voice. In a commercial mobile network, the stream media traffic has become a profitable focus of the operator, therefore more and more attention is paid to the stream media traffic.

Usually, the stream and the stream link address are both placed in a special stream content server. The user first visits a server webpage having multiple stream program sources, and then the user can select and click a program source on the webpage to receive the corresponding stream according to his interest. The access to the server webpage is an interactive process without rate and time delay requirement, which adopts a BE traffic bearer; while the access to the stream requires a switch from a transmission bearer to a stream bearer. After the access to stream is terminated, the transmission bearer should be switched back to the BE traffic bearer.

In existing commercial applications, the key technical problem of switching the transmission bearer is avoided, and no switching between the BE traffic and the streaming traffic is performed, and the BE traffic is used to bear the playing of stream media. The BE traffic sets no requirement on time delay and jittering, and considering the actual network capacity and coverage in application, the BE traffic employs some algorithms in favor of features of BE traffics, such as dynamic channel bandwidth re-configuration, downlink rate re-configuration based on the downlink code transmitting power, so that no guarantee can be provided for the playing of stream media.

The method for traffic switching prescribed by the 3GPP is that: a terminal identifies a stream, and notifies a Core Network (CN) to initiate and set up a stream transmission bearer. Specifically speaking, a content server and the terminal transmit the interactive information first during the stream transmission, i.e., the content server transmits a Session Description Protocol (SDP) file to the terminal. The file is not used to transmit the stream content but to transmit some messages to control the stream. The terminal analyzes the SDP file and notifies the CN to set up a transmission bearer suitable for the QoS attributes. After the bearer channel is set up, the server can be notified to start content transmission through a PLAY signaling, and can be notified to stop the transmission through a TEARDOWN signaling.

The method specified by the 3GPP protocol requires the terminal to identify the stream and initiate a negotiation process to the CN, which is not supported at present by many commercial terminals. In addition, a terminal is often used as a wireless gateway to transmit the stream in practical applications, but a wireless gateway is only a channel without the capability of identifying the stream. Because the method specified by the 3GPP protocol sets too high requirement on the terminals, the popularization and application of the method are limited to a great extent.

An international patent application WO 2006/004472 discloses a method for supplying quality of service parameters in HTTP messages. In the international patent application, a message from a second network node (WWW server) is received by a first network node (proxy) as a response of a content request from a client terminal. The message contains the requested content and information on required QoS parameters for delivering the contents to the client terminal. The information on required QoS parameters is read by the first network node to determine second QoS parameters, whereby it facilitates an update of QoS parameters to the second QoS parameters. The method disclosed by the international patent may further identify a requirement for changing QoS parameters during an ongoing communication session and initiate a modification of QoS parameters.

### Summary of the Invention

Embodiments of the present invention provides method and system for switching traffic during the real time stream transmission, to provide QoS guarantee for the playing of the stream media. Since it is not necessary for the terminal to identify the stream, the method can be easily popularized and applied. A content server for real time stream transmission, a GGSN for real time stream transmission and an SGSN for real time stream transmission are also provided by the embodiments of the present invention.

A method for switching traffic during a real time stream transmission includes: upon identifying a start of stream transmission from a content server to a terminal, a traffic being switched by a network side from a BE traffic to a streaming traffic by the network side; and upon identifying an end of stream transmission from the content server to the terminal, the traffic being switched from the streaming traffic to the BE traffic; where the identifying the end of the stream transmission from the content server to the terminal is implemented by a network element of a core network CN; and the process of traffic being switched from the streaming traffic to the BE traffic includes:
the network element of the CN determining whether content of a network packet sent to the content server is a signaling indicating the end of the stream transmission, if the content of the network packet is the signaling indicating the end of the stream transmission, the CN sending a request for switching a bearer channel from the streaming traffic to the BE traffic to a radio network controller, RNC, of the access network;
upon receiving the request for switching the bearer channel, the access network interacting (315) with the terminal to switch the bearer channel from the streaming traffic to the BE traffic;
the process of being switched from the BE traffic to the streaming traffic includes: determining whether content of a network packet sent to the content server is a signaling indicating the start of the stream transmission, if the content of the network packet is the signaling indicating the start of the stream transmission, the CN sending a request for switching a bearer channel from the BE traffic to the streaming traffic to an RNC of an access network; upon receiving the request for switching the bearer channel, interacting with a terminal to switch the bearer channel from the BE traffic to the streaming traffic

Preferably, the determining whether the content of the network packet is signalling indicating the start of the stream transmission includes: determine whether the content of the network packet is a PLAY signaling of real time stream protocol.

Preferably, the determining whether content of the network packet is signalling indicating the end of the stream transmission includes: determine whether the content of the network packet is a TEARDOWN signaling of the real time stream protocol.

Preferably, the process of identifying the start or end of stream transmission from a content server to a terminal by a network element of the CN includes: analyze a destination address from a network packet forwarded by the network element of the CN, if the destination address is an address of the content server, analyze content of the network packet, and determine whether content of the network packet is a signaling indicating the start or end of the stream transmission.

The network element of CN is the SGSN or the GGSN.

A system for switching traffic during a real time stream transmission includes: a content server for providing a real time stream transmission; a network side for performing a traffic switching from a BE traffic to a streaming traffic when identifying a start of the stream transmission, and for performing a traffic switching from the streaming traffic to the BE traffic when identifying an end of the real time stream transmission, and

in the system, a core network of the network side is configured to analyze and identify a network packet including a signaling sent to the content server by a terminal, to determine that the signaling sent to the content server by the terminal is a signaling indicating the end of the stream transmission, and is configured to send to an access network a request for switching the bearer channel from the streaming traffic to the BE traffic

In the system, the network side includes: an SGSN of a CN, sending a request for switching a bearer channel between the BE traffic and the streaming traffic; an RNC of the access network, receiving the request for switching a bearer channel between the BE traffic and the streaming traffic, and performing the switching between the BE traffic and the streaming traffic.

In the system, the SGSN is further configured to identify the start and the end of the real time stream transmission, and send a request for switching a bearer channel between the BE traffic and the streaming traffic to the RNC of the access network.

In the system, the network side includes: a GGSN configured to identify the start and the end of the real time stream transmission, and send a request for switching a bearer channel between the BE traffic and the streaming traffic to the RNC of the access network.

A GGSN for real time stream transmission includes: a first unit, for sending a request for switching a bearer channel from a BE traffic to a streaming traffic to a GPRS, Support Node, SGSN, of a CN, when the content of a network packet sent to a content server by a terminal is the signaling indicating the start of the stream transmission, and sending a request for switching the bearer channel from the streaming traffic to the BE traffic to the SGSN of the CN when the content of the network packet is the signaling indicating the end of the stream transmission; and a second unit, for determining whether content of the network packet is signaling indicating a start or an end of a stream transmission.

An SGSN for real time stream transmission includes: a first unit, for sending a request for switching a bearer channel from a BE traffic to a streaming traffic to an access network when the content of a network packet sent to a content server by a terminal is the signaling indicating the start of the stream transmission; and sending a request for switching the bearer channel from the streaming traffic to the BE traffic to the access network when the content of the network packet sent to the content server by the terminal is the signaling indicating the end of the stream transmission; and a second unit, for determining whether content of the network packet is signaling indicating a start or an end of a stream transmission.

It can be seen from the above solution that the content server is used to notify the CN to perform the switching between the BE traffic and the streaming traffic when the stream media transmission starts or ends in accordance with an embodiment of the present invention, or to identify the stream media transmission starts or ends through the method in which the SGSN or the GGSN analyze the signalling, and to perform the switching between the BE traffic and the streaming traffic. The method ensures the QoS of the stream media transmission, which is not necessary for the terminal to identify streaming traffic and notify CN during the traffic switching, thus reduces the requirement for the terminal. The method is easy to be popularized and applied.

### Brief Description of the Drawings

Fig.1 is a schematic diagram illustrating the network architecture in an embodiment of the present invention.
Fig.2 is a flow chart in accordance with embodiment 1 of the present invention.
Fig.3 is a flow chart in accordance with embodiment 2 of the present invention.

### Detailed description of the Invention

The embodiments of the present invention are described in detail hereinafter with reference to the accompanying drawings to further clarify the objectives, technical solutions and advantages of the embodiments of the present invention.

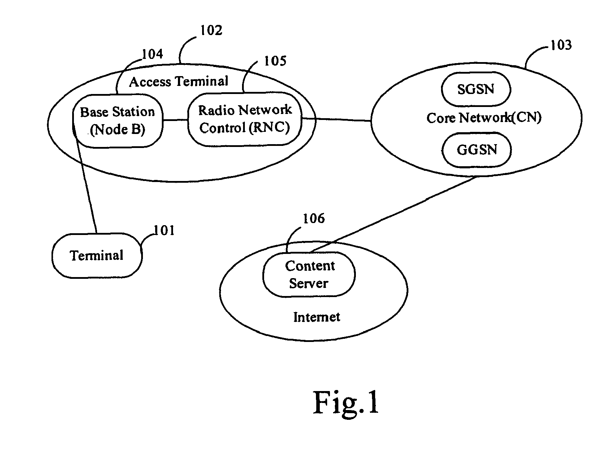

A Wideband Code Division Multiple Access (WCDMA) network system is one of the mainstream networks of the 3G mobile communication systems, adopting the General Packet Radio Service (GPRS) techniques. The schematic diagram illustrating the WCDMA system architecture is shown in Fig.1, which includes a terminal 101, an access network 102 and a CN 103, wherein the CN 103 connects with the Internet to implement the interaction between the mobile communication network and the Internet. The access network 102 further includes a base station (Node B) 104 and a Radio Network Controller (RNC) 105, the CN 103 further includes an SGSN and a GGSN. To play a stream media, there is also a content server 106 in the network, which is called a stream media server, and the stream media or the stream media link is directly placed on the webpage of the content server. The user visits the webpage of the content server 106 in the Internet by the terminal 101 via the access network 103 and the CN 103, to select, click and play the stream media which the user wants to watch. As the visit to the webpage of the content server by the user is an interactive traffic without requirements on rate and time delay, it uses the BE traffic as the bearer. When the user clicks the stream media on the webpage, it is necessary to switch the BE traffic to the streaming traffic to bear the stream media. In embodiments of the invention, the stream media refers to stream, namely real time stream, and the stream media transmission refers to the stream transmission.

According to different initiators of traffic switching, the solution can be implemented in two embodiments, which are the traffic switching performed by the content server and the traffic switching performed by the network element such as the SGSN or the GGSN in the CN.

### Embodiment 1

The content server initiates the BE traffic/streaming traffic switching.

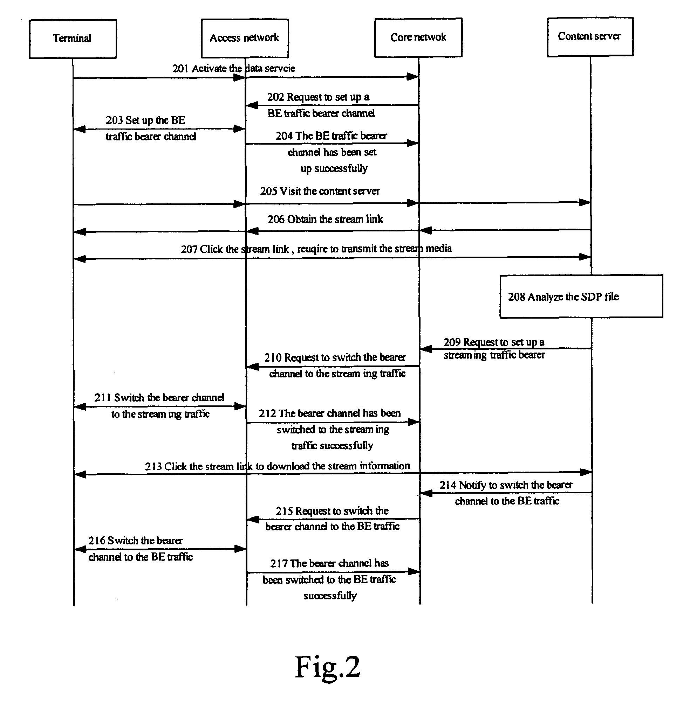

The flow chart of the embodiment is shown in Fig.2, which includes the following steps.

Step 201: a terminal sends a request for activating data traffic to a CN via an access network.

Step 202: upon receiving the request, the CN sends a request to the access network for setting up a BE traffic bearer channel.

Step 203: upon receiving the request from the CN, the access network interacts with the terminal to set up the BE traffic bearer channel.

Step 204: the access network sends to the CN a message indicating the BE traffic bearer channel has been set up successfully.

Steps 205 to 206: the terminal visits the content server in the manner of BE traffic bearer to obtain the stream media network link address through the access network and the CN.

Step 207: the terminal visits the stream media network link, and requests the stream media transmission.

Step 208: the content server analyzes the SDP file corresponding to the stream media to be transmitted, and obtains the QoS requirement of the stream media transmission. The SDP file includes: basic information of the session, such as the title and author as well as the type of the stream media, the bandwidth requirement, and etc.

Step 209: the content server sends a request for setting up a streaming traffic bearer to the SGSN of the CN, wherein the request includes the QoS requirement of setting up the streaming traffic. The SGSN activates the PDP context by interacting with the GGSN, and authenticates the terminal user.

Step 210: if the authentication is successful, the CN sends to the RNC of the access network a request for switching the bearer channel from the BE traffic to the streaming traffic.

Step 211: upon receiving the request, the access network interacts with the terminal to switch the bearer channel from the BE traffic to the streaming traffic.

Step 212: the access network notifies the SGSN in the CN that the bearer channel has been switched to the streaming traffic successfully.

Step 213: the terminal sends a PLAY signaling of the Real-Time Streaming Protocol (RTSP) to the content server, upon receiving the PLAY signaling, the content server transmits the stream media to the terminal via the streaming traffic bearer channel.

Step 214: when the stream media transmission is finished, the terminal sends to the content server a TEARDOWN signaling of RTSP for terminating the stream media transmission; upon receiving the TEARDOWN signaling, the content server sends a request for setting up a BE traffic bearer to the SGSN in the CN.

Step 215: the SGSN in the CN sends to the RNC of the access network a request for switching the bearer channel from the streaming traffic to the BE traffic.

Step 216: upon receiving the request, the access network interacts with the terminal to switch the bearer channel to the BE traffic.

Step 217: the access network notifies the SGSN in the CN that the bearer channel has been switched to the BE traffic successfully, and terminates the current traffic flow.

### Embodiment 2

The CN initiates the BE traffic/streaming traffic switching.

In this embodiment, network element of the CN, for example, an SGSN or a GGSN analyzes network packet sent to a content server by a terminal. When determining that stream media transmission is about to start according to the contents of the network packet, the network element of the CN switches the bearer channel from the BE traffic to the streaming traffic. When determining the stream media transmission is about to end from the contents of the network packet, the network element of the CN switches the bearer channel from the streaming traffic to the BE traffic. Therefore the embodiment requires the SGSN or the GGSN to analyze and identify the network packet, and the analyzing step can be divided into two steps:
Step 1, analyzing a destination address of a forwarded network packet, and determining whether the destination address is the address of the content server. If the destination address is the address of the content server, proceed to Step 2; otherwise, forward the network packet;
Step 2, further analyzing the content of the network packet, determining whether the content is a PLAY signaling or a TEARDOWN signaling which both belongs to the RTSP; if the content is a PLAY signaling, the SGSN or the GGSN initiates the switching from the BE traffic to the streaming traffic; if the content is a TEARDOWN signaling, the SGSN or the GGSN initiates the switching from the streaming traffic to the BE traffic. If the content of the network packet is neither of the two kinds of signaling, forward the network packet.

The start or end of the stream media transmission is determined by identifying a PLAY signaling or a TEARDOWN signaling in the Step 2 mentioned above, which can also be determined by identifying other kinds of signaling indicating the start or end of the stream media or other characteristic information.

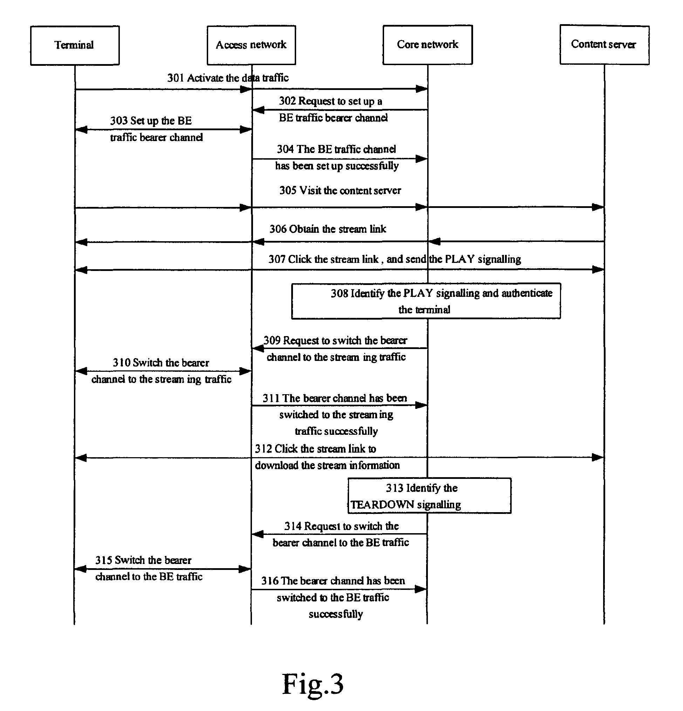

The flow chart of this embodiment is shown in Fig.3, which includes the following steps.

Step 301: a terminal sends a request for activating data traffic to a CN via an access network.

Step 302: upon receiving the request, the CN sends a request to the access network for setting up a BE traffic bearer channel.

Step 303: upon receiving the request from the CN, the access network interacts with the terminal to set up the BE traffic bearer channel.

Step 304: the access network sends to the CN a message indicating the BE traffic bearer channel has been set up successfully.

Steps 305 to 306: the terminal visits the content server in the manner of the BE traffic bearer to obtain a stream media network link address via the access network and the CN.

Step 307: the terminal visits the stream media network link, and sends a RTSP PLAY signaling to the content server.

Step 308: the SGSN or the GGSN determines that the signalling sent to the content server from the terminal is the PLAY signaling by analyzing and identifying the network packet, obtains and analyzes the SDP file corresponding to the stream media from the content server, and obtains the QoS requirement of the stream media transmission. The content of the SDP file includes basic information of the session such as the title and author, the type of the stream media, the bandwidth requirement, and etc. The SGSN activates the PDP context through interacting with the GGSN, and authenticates the terminal user.

Step 309: if the authentication is successful, the SGSN of the CN sends to the RNC of the access network a request for switching the bearer channel from the BE traffic to the streaming traffic.

Step 310: upon receiving the request, the access network interacts with the terminal to switch the bearer channel from the BE traffic to the streaming traffic.

Step 311: the access network notifies the SGSN of the CN that the bearer channel has been switched to the streaming traffic successfully.

Step 312: the content server transmits the stream media to the terminal via the established streaming traffic bearer channel.

Step 313: when the stream media transmission is finished, the terminal sends a RTSP TEARDOWN signaling to terminate the stream media transmission to the content server, the SGSN of the CN or the GGSN of the CN determines the signalling sent to the content server by the terminal is a TEARDOWN signaling by analyzing and identifying the network packet.

Step 314: the SGSN of the CN sends to the RNC of the access network a request for switching the bearer channel from the streaming traffic to the BE traffic.

Step 315: upon receiving the request, the access network interacts with the terminal to switch the bearer channel to the BE traffic.

Step 316: the access network notifies the SGSN of the CN that the bearer channel has been switched to the BE traffic successfully.

The foregoing is only preferred embodiments of the present invention and is not used for limiting the protection scope thereof. All the modifications, equivalent replacements or improvements of the present invention shall be included in the protection scope of the present invention.

## Claims

1. A method for switching traffic during a real time stream transmission **characterized by** comprising:
upon identifying(308) a start of stream transmission from a content server to a terminal, a traffic being switched by a network side from a Best Effort, BE, traffic to a streaming traffic, and
upon identifying (313) an end of stream transmission from the content server to the terminal, the traffic being switched by the network side from the streaming traffic to the BE traffic.
**characterized in that**
said identifying the end of the stream transmission from the content server to the terminal is implemented by a network element of a core network, CN;
the traffic being switched from the streaming traffic to the BE traffic comprises:
the network element of the CN determining whether content of a network packet sent to the content server is a signaling indicating the end of the stream transmission, if the content of the network packet is the signaling indicating the end of the stream transmission, the CN sending a request for switching a bearer channel from the streaming traffic to the BE traffic to a radio network controller, RNC, of the access network;
upon receiving the request for switching the bearer channel, the access network interacting (315) with the terminal to switch the bearer channel from the streaming traffic to the BE traffic.

2. The method of claim 1, wherein said identifying the start of stream transmission from a content server to a terminal is implemented by the network element of the CN;
the traffic being switched from the BE traffic to the streaming traffic comprises:
the network element of the CN determining whether content of another network packet sent to the content server is a signaling indicating the start of the stream transmission, if the content of the network packet is the signaling indicating the start of the stream transmission, the CN sending (309) a request for switching the bearer channel from the BE traffic to the streaming traffic to the RNC of the access network;
upon receiving the request for switching the bearer channel, the access network interacting (310) with a terminal to switch the bearer channel from the BE traffic to the streaming traffic

3. The method of claim 2, wherein the determining whether the content of the other network packet is signaling indicating the start of the stream transmission comprises:
determining whether the content of the network packet is a PLAY signaling of real time stream protocol.

4. The method of claim 1, wherein the determining whether content of the network packet is signaling indicating the end of the stream transmission comprises:
determining whether the content of the network packet is a TEARDOWN signaling of the real time stream protocol.

5. The method of claim 2, wherein said identifying the start of stream transmission from the content server to the terminal by the network element of the CN comprises:
analyzing a destination address from a network packet forwarded by the network element of the CN, and if the destination address is an address of the content server, analyzing content of the network packet, and determining whether content of the network packet is a signaling indicating the start of the stream transmission.

6. The method of claim 1, wherein said identifying the end of stream transmission from the content server to the terminal by the network element of the CN comprises:
analyzing a destination address from a network packet forwarded by the network element of the CN, and if the destination address is an address of the content server, analyzing content of the network packet, and determining whether content of the network packet is a signaling indicating the end of the stream transmission.

7. The method of any of claims 1 to 6, wherein the network element of the CN is a Serving General Packet Radio Service, GPRS, Support Node, SGSN.

8. The method of any of claims 1 to 6, wherein the network element of the CN is a Gateway General Packet Radio Service Supporting Node, GGSN.

9. The method of claim 1, wherein the network packet sent to the content server is sent from the terminal, when the stream media transmission is finished.

10. The method of claim 1, wherein the CN sending a request for switching the bearer channel from the streaming traffic to the BE traffic to the RNC of the access network comprises:
a Serving General Packet Radio Service, GPRS, Support Node, SGSN of the CN sends to the RNC of the access network a request for switching the bearer channel from the streaming traffic to the BE traffic.

11. The method of claim 2, wherein the CN sending a request for switching the bearer channel from the BE traffic to the streaming traffic to the RNC of the access network comprises:
a Serving General Packet Radio Service, GPRS, Support Node, SGSN of the CN sends to the RNC of the access network a request for switching the bearer channel from the BE traffic to the streaming traffic.

12. A system for switching traffic during a real time stream transmission, **characterized by** comprising:
a content server (106), providing a real time stream transmission;
a network side, performing a traffic switching from a Best Effort, BE, traffic to a streaming traffic when identifying a start of the stream transmission; and
performing a traffic switching from the streaming traffic to the BE traffic when identifying an end of the real time stream transmission, **characterised in that**
a core network (103) of the network side is configured to determine content of a network packet sent to the content server by the terminal is a signaling indicating the end of the stream transmission, and
to send to an access network (102) of the network side a request for switching a bearer channel from the streaming traffic to the BE traffic.

13. The system of claim 12, wherein the network side comprises:
a Serving General Packet Radio Service ,GPRS, Support Node ,SGSN, of a Core Network ,CN, (103) which is used for sending a request for switching the bearer channel between the BE traffic and the streaming traffic; and
a Radio Network Control ,RNC, (105) of the access network (102) which is used for receiving the request for switching the bearer channel between the BE traffic and the streaming traffic, and is used for performing the switching between the BE traffic and the streaming traffic.

14. The system of claim 13, wherein the SGSN is further configured to identify the start and the end of the real time stream transmission, and send a request for switching the bearer channel between the BE traffic and the streaming traffic to the RNC of the access network (102).

15. The system of claim 13, wherein the network side (102, 103) comprises a Gateway General Packet Radio Service Supporting Node, GGSN, configured to identify the start and the end of the real time stream transmission, and send a request for switching the bearer channel between the BE traffic and the streaming traffic to the RNC of the access network (102).

16. A Gateway General Packet Radio Service Supporting Node, GGSN, for real time stream transmission, **characterized by** comprising:
a first unit, sending a request for switching a bearer channel from a Best Effort, BE, traffic to a streaming traffic to a Serving General Packet Radio Service, GPRS, Support Node, SGSN, of a core network, CN, (103) when the content of a network packet sent to a content server (106) by a terminal (101) is the signaling indicating the start of the stream transmission, and sending a request for switching the bearer channel from the streaming traffic to the BE traffic to the SGSN of the CN (103) when the content of the network packet is the signaling indicating the end of the stream transmission; and
a second unit, determining whether content of the network packet is signaling indicating a start or an end of a stream transmission

17. A Serving General Packet Radio Service, GPRS, Support Node, SGSN, for real time stream transmission, **characterized by** comprising:
a first unit, sending a request for switching a bearer channel from a Best Effort, BE, traffic to a streaming traffic to an access network (102) when the content of a network packet sent to a content server (106) by a terminal (101) is the signaling indicating the start of the stream transmission, and sending a request for switching the bearer channel from the streaming traffic to the BE traffic to the access network (102) when the content of the network packet sent to the content server (106) by the terminal (101) is the signaling indicating the end of the stream transmission; and
a second unit, determining whether content of the network packet is signaling indicating a start or an end of a stream transmission.

## Patentansprüche

1. Verfahren zum Umschalten von Verkehr während einer Echtzeit-Stream-Übertragung, **gekennzeichnet durch** die folgenden Schritte:
bei Identifizierung (308) eines Starts der Stream-Übertragung von einem Inhaltsserver zu einem Endgerät wird ein Verkehr **durch** eine Netzseite von einem Verkehr des Typs Best Effort BE auf einen Streaming-Verkehr umgeschaltet und
bei Identifizierung (313) eines Endes der Stream-Übertragung von dem Inhaltsserver zu dem Endgerät wird der Verkehr **durch** die Netzseite von dem Streaming-Verkehr auf den BE-Verkehr umgeschaltet,
**dadurch gekennzeichnet, dass**
das Identifizieren des Endes der Stream-Übertragung von dem Inhaltsserver zu dem Endgerät **durch** ein Netzelement eines Kernnetzes CN implementiert wird;
der von dem Streaming-Verkehr auf den BE-Verkehr umgeschaltete Verkehr Folgendes umfasst:
das Netzelement des CN bestimmt, ob Inhalt eines zu dem Inhaltsserver gesendeten Netzpakets eine Signalisierung ist, die das Ende der Stream-Übertragung anzeigt, wenn der Inhalt des Netzpakets die Signalisierung ist, die das Ende der Stream-Übertragung anzeigt, sendet das CN eine Anforderung zum Umschalten eines Trägerkanals von dem Streaming-Verkehr auf den BE-Verkehr zu einer Funknetzsteuerung RNC des Zugangsnetzes; und
beim Empfangen der Anforderung zum Umschalten des Trägerkanals tritt das Zugangsnetz mit dem Endgerät in Dialog (315), um den Trägerkanal von dem Streaming-Verkehr auf den BE-Verkehr umzuschalten.

2. Verfahren nach Anspruch 1, wobei das Identifizieren des Starts der Stream-Übertragung von einem Inhaltsserver zu einem Endgerät durch das Netzelement des CN implementiert wird;
wobei das Umschalten des Verkehrs von dem BE-Verkehr auf den Streaming-Verkehr Folgendes umfasst:
das Netzelement des CN bestimmt, ob Inhalt eines anderen zu dem Inhaltsserver gesendeten Netzpakets eine Signalisierung ist, die den Start der Stream-Übertragung anzeigt, wenn der Inhalt des Netzpakets die Signalisierung ist, die den Start der Stream-Übertragung anzeigt, sendet (309) das CN eine Anforderung zum Umschalten des Trägerkanals von dem BE-Verkehr auf den Streaming-Verkehr zu der RNC des Zugangsnetzes;
beim Empfangen der Anforderung zum Umschalten des Trägerkanals tritt das Zugangsnetz mit einem Endgerät in Dialog (310), um den Trägerkanal von dem BE-Verkehr auf den Streaming-Verkehr umzuschalten.

3. Verfahren nach Anspruch 2, wobei das Bestimmen, ob der Inhalt des anderen Netzpakets Signalisierung ist, die den Start der Stream-Übertragung anzeigt, Folgendes umfasst:
Bestimmen, ob der Inhalt des Netzpakets eine PLAY-Signalisierung des Echtzeit-Stream-Protokolls ist.

4. Verfahren nach Anspruch 1, wobei das Bestimmen, ob Inhalt des Netzpakets Signalisierung ist, die das Ende der Stream-Übertragung anzeigt, Folgendes umfasst:
Bestimmen, ob der Inhalt des Netzpakets eine TEARDOWN-Signalisierung des Echtzeit-Stream-Protokolls ist.

5. Verfahren nach Anspruch 2, wobei das Identifizieren des Starts der Stream-Übertragung von dem Inhaltsserver zu dem Endgerät durch das Netzelement des CN Folgendes umfasst:
Analysieren einer Zieladresse aus einem durch das Netzelement des CN weitergeleiteten Netzpaket, und wenn die Zieladresse eine Adresse des Inhaltsservers ist, Analysieren von Inhalt des Netzpakets und Bestimmen, ob Inhalt des Netzpakets eine Signalisierung ist, die den Start der Stream-Übertragung anzeigt.

6. Verfahren nach Anspruch 1, wobei das Identifizieren des Endes der Stream-Übertragung von dem Inhaltsserver zu dem Endgerät durch das Netzelement des CN Folgendes umfasst:
Analysieren einer Zieladresse aus einem durch das Netzelement des CN weitergeleiteten Netzpaket, und wenn die Zieladresse eine Adresse des Inhaltsservers ist, Analysieren von Inhalt des Netzpakets und Bestimmen, ob Inhalt des Netzpakets eine Signalisierung ist, die das Ende der Stream-Übertragung anzeigt.

7. Verfahren nach einem der Ansprüche 1 bis 6, wobei das Netzelement des CN ein Support Node SGSN des Serving General Packet Radio Service GPRS ist.

8. Verfahren nach einem der Ansprüche 1 bis 6, wobei das Netzelement des CN ein Gateway General Packet Radio Service Supporting Node GGSN ist.

9. Verfahren nach Anspruch 1, wobei das zu dem Inhaltsserver gesendete Netzpaket von dem Endgerät aus gesendet wird, wenn die Stream-Medienübertragung beendet ist.

10. Verfahren nach Anspruch 1, wobei das Senden einer Anforderung zum Umschalten des Trägerkanals von dem Streaming-Verkehr auf den BE-Verkehr zu der RNC des Zugangsnetzes durch das CN Folgendes umfasst:
ein Support Node SGSN des Serving General Packet Radio Service GPRS des CN sendet eine Anforderung zum Umschalten des Trägerkanals von dem Streaming-Verkehr auf den BE-Verkehr zu der RNC des Zugangsnetzes.

11. Verfahren nach Anspruch 2, wobei das Senden einer Anforderung zum Umschalten des Trägerkanals von dem BE-Verkehr auf den Streaming-Verkehr zu der RNC des Zugangsnetzes durch das CN Folgendes umfasst:
ein Support Node SGSN des Serving General Packet Radio Service GPRS des CN sendet eine Anforderung zum Umschalten des Trägerkanals von dem BE-Verkehr auf den Streaming-Verkehr zu der RNC des Zugangsnetzes.

12. System zum Umschalten von Verkehr während einer Echtzeit-Stream-Übertragung, **dadurch gekennzeichnet, dass** es Folgendes umfasst:
einen Inhaltsserver (106), der Echtzeit-Stream-Übertragung bereitstellt;
eine Netzseite, die eine Verkehrsumschaltung von einem Verkehr des Typs Best Effort BE auf einen Streaming-Verkehr durchführt, wenn ein Start der Stream-Übertragung identifiziert wird; und
Durchführen einer Verkehrsumschaltung von dem Streaming-Verkehr auf den BE-Verkehr, wenn ein Ende der Echtzeit-Stream-Übertragung identifiziert wird, **dadurch gekennzeichnet, dass**
ein Kernnetz (103) der Netzseite dafür ausgelegt ist, zu bestimmen, dass Inhalt eines durch das Endgerät zu dem Inhaltsserver gesendeten Netzpakets eine Signalisierung ist, die das Ende der Stream-Übertragung anzeigt, und
eine Anforderung zum Umschalten eines Trägerkanals von dem Streaming-Verkehr auf den BE-Verkehr zu einem Zugangsnetz (102) der Netzseite zu senden.

13. System nach Anspruch 12, wobei die Netzseite Folgendes umfasst:
einen Support Node SGSN des Serving General Packet Radio Service GPRS eines Kernnetzes CN (103), der zum Senden einer Anforderung zum Umschalten des Trägerkanals zwischen dem BE-Verkehr und dem Streaming-Verkehr verwendet wird; und
eine Funknetzsteuerung RNC (105) des Zugangsnetzes (102), die zum Empfangen der Anforderung zum Umschalten des Trägerkanals zwischen dem BE-Verkehr und dem Streaming-Verkehr verwendet wird und zum Durchführen des Umschaltens zwischen dem BE-Verkehr und dem Streaming-Verkehr verwendet wird.

14. System nach Anspruch 13, wobei der SGSN ferner dafür ausgelegt ist, den Start und das Ende der Echtzeit-Stream-Übertragung zu identifizieren und eine Anforderung zum Umschalten des Trägerkanals zwischen dem BE-Verkehr und dem Streaming-Verkehr zu der RNC des Zugangsnetzes (102) zu senden.

15. System nach Anspruch 13, wobei die Netzseite (102, 103) einen Gateway General Packet Radio Service Supporting Node GGSN umfasst, der dafür ausgelegt ist, den Start und das Ende der Echtzeit-Stream-Übertragung zu identifizieren und eine Anforderung zum Umschalten des Trägerkanals zwischen dem BE-Verkehr und dem Streaming-Verkehr zu der RNC des Zugangsnetzes (102) zu senden.

16. Gateway General Packet Radio Service Supporting Node GGSN für Echtzeit-Stream-Übertragung, **dadurch gekennzeichnet, dass** er Folgendes umfasst:
eine erste Einheit, die eine Anforderung zum Umschalten eines Trägerkanals von einem Verkehr des Typs Best Effort BE auf einen Streaming-Verkehr zu einem Support Node SGSN des Serving General Packet Radio Service GPRS eines Kernnetzes CN (103) sendet, wenn der Inhalt eines durch ein Endgerät (101) zu einem Inhaltsserver (106) gesendeten Netzpakets die Signalisierung ist, die den Start der Stream-Übertragung anzeigt, und eine Anforderung zum Umschalten des Trägerkanals von dem Streaming-Verkehr auf den BE-Verkehr zu dem SGSN des CN (103) sendet, wenn der Inhalt des Netzpakets die Signalisierung ist, die das Ende der Stream-Übertragung anzeigt; und
eine zweite Einheit, die bestimmt, ob Inhalt des Netzpakets Signalisierung ist, die einen Start oder ein Ende einer Stream-Übertragung anzeigt.

17. Support Node SGSN des Serving General Packet Radio Service GPRS für Echtzeit-Stream-Übertragung, **dadurch gekennzeichnet, dass** er Folgendes umfasst:
eine erste Einheit, die eine Anforderung zum Umschalten eines Trägerkanals von einem Verkehr des Typs Best Effort BE auf einen Streaming-Verkehr zu einem Zugangsnetz (102) sendet, wenn der Inhalt eines durch ein Endgerät (101) zu einem Inhaltsserver (106) gesendeten Netzpakets die Signalisierung ist, die den Start der Stream-Übertragung anzeigt; und eine Anforderung zum Umschalten des Trägerkanals von dem Streaming-Verkehr auf den BE-Verkehr zu dem Zugangsnetz (102) sendet, wenn der Inhalt des durch das Endgerät (101) zu dem Inhaltsserver (106) gesendeten Netzpakets die Signalisierung ist, die das Ende der Stream-Übertragung anzeigt; und
eine zweite Einheit, die bestimmt, ob Inhalt des Netzpakets Signalisierung ist, die einen Start oder ein Ende einer Stream-Übertragung anzeigt.

## Revendications

1. Procédé de commutation de trafic durant une transmission de trains en temps réel, **caractérisé en ce qu'**il comprend :
à l'identification (308) d'un début de transmission de trains depuis un serveur de contenu vers un terminal, la commutation d'un trafic par un côté réseau d'un trafic Au Mieux, BE, en un trafic continu, et
à l'identification (313) d'une fin de transmission de trains depuis le serveur de contenu vers le terminal, la commutation du trafic par le côté réseau du trafic continu en le trafic BE,
**caractérisé en ce que**
ladite identification de la fin de la transmission de trains depuis le serveur de contenu vers le terminal est mise en oeuvre par un élément de réseau d'un réseau central, CN ;
la commutation du trafic du trafic continu en le trafic BE comprend :
la détermination par l'élément de réseau du CN du fait que le contenu d'un paquet de réseau envoyé au serveur de contenu est ou non une signalisation indiquant la fin de la transmission de trains, si le contenu du paquet de réseau est la signalisation indiquant la fin de la transmission de trains, l'envoi par le CN d'une demande de commutation d'un canal support du trafic continu sur le trafic BE à un contrôleur de réseau radio, RNC, du réseau d'accès ;
à la réception de la demande de commutation du canal support, l'interaction (315) du réseau d'accès avec le terminal pour commuter le canal support du trafic continu sur le trafic BE.

2. Procédé selon la revendication 1, dans lequel ladite identification du début de la transmission de trains depuis un serveur de contenu vers un terminal est mise en oeuvre par l'élément de réseau du CN ;
la commutation du trafic du trafic BE en le trafic continu comprend :
la détermination par l'élément de réseau du CN du fait que le contenu d'un autre paquet de réseau envoyé au serveur de contenu est ou non une signalisation indiquant le début de la transmission de trains, si le contenu du paquet de réseau est la signalisation indiquant le début de la transmission de trains, l'envoi par le CN (309) d'une demande de commutation du canal support du trafic BE sur le trafic continu au RNC du réseau d'accès ;
à la réception de la demande de commutation du canal support, l'interaction (310) du réseau d'accès avec un terminal pour commuter le canal support du trafic BE sur le trafic continu.

3. Procédé selon la revendication 2, dans lequel la détermination du fait que le contenu de l'autre paquet de réseau est ou non une signalisation indiquant le début de la transmission de trains comprend :
la détermination du fait que le contenu du paquet de réseau est ou non une signalisation de LECTURE d'un protocole de trains en temps réel.

4. Procédé selon la revendication 1, dans lequel la détermination du fait que le contenu du paquet de réseau est ou non une signalisation indiquant la fin de la transmission de trains comprend :
la détermination du fait que le contenu du paquet de réseau est ou non une signalisation de DÉCONNEXION du protocole de trains en temps réel.

5. Procédé selon la revendication 2, dans lequel ladite identification du début de la transmission de trains depuis le serveur de contenu vers le terminal par l'élément de réseau du CN comprend :
l'analyse d'une adresse de destination depuis un paquet de réseau acheminé par l'élément de réseau du CN, et si l'adresse de destination est une adresse du serveur de contenu, l'analyse du contenu du paquet de réseau, et la détermination du fait que le contenu du paquet de réseau est ou non une signalisation indiquant le début de la transmission de trains.

6. Procédé selon la revendication 1, dans lequel ladite identification de la fin de la transmission de trains depuis le serveur de contenu vers le terminal par l'élément de réseau du CN comprend :
l'analyse d'une adresse de destination depuis un paquet de réseau acheminé par l'élément de réseau du CN, et si l'adresse de destination est une adresse du serveur de contenu, l'analyse du contenu du paquet de réseau, et la détermination du fait que le contenu du paquet de réseau est ou non une signalisation indiquant la fin de la transmission de trains.

7. Procédé selon l'une quelconque des revendications 1 à 6, dans lequel l'élément de réseau du CN est un Noeud de Support de Service Radio par Paquets Général de Desserte GPRS, ou Noeud SGSN.

8. Procédé selon l'une quelconque des revendications 1 à 6, dans lequel l'élément de réseau du CN est un Noeud de Support de Service Radio par Paquets Général Passerelle, GGSN.

9. Procédé selon la revendication 1, dans lequel le paquet de réseau envoyé au serveur de contenu est envoyé par le terminal, quand la transmission multimédia de trains est achevée.

10. Procédé selon la revendication 1, dans lequel l'envoi par le CN d'une demande de commutation du canal support du trafic continu sur le trafic BE au RNC du réseau d'accès comprend :
l'envoi par un Noeud de Support de Service Radio par Paquets Général de Desserte GPRS, ou Noeud SGSN, du CN au RNC du réseau d'accès d'une demande de commutation du canal support du trafic continu sur le trafic BE.

11. Procédé selon la revendication 2, dans lequel l'envoi par le CN d'une demande de commutation du canal support du trafic BE sur le trafic continu au RNC du réseau d'accès comprend :
l'envoi par un Noeud de Support de Service Radio par Paquets Général de Desserte GPRS, ou Noeud SGSN, du CN au RNC du réseau d'accès d'une demande de commutation du canal support du trafic BE sur le trafic continu.

12. Système de commutation de trafic durant une transmission de trains en temps réel, **caractérisé en ce qu'**il comprend :
un serveur de contenu (106), assurant une transmission de trains en temps réel ;
un côté réseau, exécutant une commutation de trafic d'un trafic Au Mieux, BE, en un trafic continu à l'identification d'un début de transmission de trains ; et exécutant une commutation de trafic du trafic continu en le trafic BE à l'identification d'une fin de transmission de trains, **caractérisé en ce**
**qu'**un réseau central (103) du côté réseau est configuré pour déterminer que le contenu d'un paquet de réseau envoyé au serveur de contenu par le terminal est une signalisation indiquant la fin de la transmission de trains, et
pour envoyer à un réseau d'accès (102) du côté réseau une demande de commutation d'un canal support du trafic continu sur le trafic BE.

13. Système selon la revendication 12, dans lequel le côté réseau comprend :
un Noeud de Support de Service Radio par Paquets Général de Desserte, GPRS, ou
Noeud SGSN, d'un Réseau Central, CN, (103) qui est utilisé pour envoyer une demande de commutation du canal support entre le trafic BE et le trafic continu ; et
un Contrôleur de Réseau Radio, RNC, (105) du réseau d'accès (102) qui est utilisé pour recevoir la demande de commutation du canal support entre le trafic BE et le trafic continu, et est utilisé pour effectuer la commutation entre le trafic BE et le trafic continu.

14. Système selon la revendication 13, dans lequel le SGSN est configuré en outre pour identifier le début et la fin de la transmission de trains en temps réel, et envoyer une demande de commutation du canal support entre le trafic BE et le trafic continu au RNC du réseau d'accès (102).

15. Système selon la revendication 13, dans lequel le côté réseau (102, 103) comprend un Noeud de Support de Service Radio par Paquets Général Passerelle, GGSN, configuré pour identifier le début et la fin de la transmission de trains en temps réel, et envoyer une demande de commutation du canal support entre le trafic BE et le trafic continu au RNC du réseau d'accès (102).

16. Noeud de Support de Service Radio par Paquets Général Passerelle, GGSN, de transmission de trains en temps réel, **caractérisé en ce qu'**il comprend :
une première unité, qui envoie une demande de commutation d'un canal support d'un trafic Au Mieux, BE, en un trafic continu à un Noeud de Support de Service Radio par Paquets Général de Desserte, GPRS, ou Noeud SGSN, d'un réseau central, CN, (103) quand le contenu d'un paquet de réseau envoyé à un serveur de contenu (106) par un terminal (101) est la signalisation indiquant le début de la transmission de trains, et
envoie une demande de commutation d'un canal support du trafic continu en le trafic BE au SGSN du CN (103) quand le contenu du paquet de réseau est la signalisation indiquant la fin de la transmission de trains ; et
une seconde unité, qui détermine si le contenu du paquet de réseau est ou non une signalisation indiquant un début ou une fin d'une transmission de trains.

17. Noeud de Support de Service Radio par Paquets Général de Desserte, GPRS, ou Noeud SGSN, de transmission de trains en temps réel, **caractérisé en ce qu'**il comprend :
une première unité, qui envoie une demande de commutation d'un canal support d'un trafic Au Mieux, BE, en un trafic continu à un réseau d'accès (102) quand le contenu d'un paquet de réseau envoyé à un serveur de contenu (106) par un terminal (101) est la signalisation indiquant le début de la transmission de trains ; et envoie une demande de commutation du canal support du trafic continu sur le trafic BE au réseau d'accès (102) quand le contenu du paquet de réseau envoyé au serveur de contenu (106) par le terminal (101) est la signalisation indiquant la fin de la transmission de trains ; et
une seconde unité, qui détermine si le contenu du paquet de réseau est ou non une signalisation indiquant un début ou une fin d'une transmission de trains.
